# EUROPÄISCHE PATENTANMELDUNG

(11) **EP 3 002 578 A1**
(43) Veröffentlichungstag der Anmeldung: **06.04.2016**
(21) Anmeldenummer: 15183491.8
(22) Anmeldetag: 02.09.2015
(51) Int. Cl.: G01M 17/007, G01S 7/40, G01S 7/497

(54) **PRÜFVORRICHTUNG UND PRÜFANORDNUNG**

(30) Priorität: 02.09.2014 DE 102014217524
(71) Anmelder: MAHA Maschinenbau Haldenwang GmbH & Co. KG, 87490 Haldenwang (DE)
(72) Erfinder: Beaujean, Frank, 87542 Altusried (DE); Unger, Andreas, 01187 Dresden (DE)
(74) Vertreter: MERH-IP Matias Erny Reichl Hoffmann Patentanwälte PartG mbB

(57) **Zusammenfassung**

Die Erfindung betrifft eine Prüfvorrichtung zur Prüfung von sicherheitstechnischen Einrichtungen 4 eines Kraftfahrzeuges 2, insbesondere betrifft die Erfindung eine Scheinwerfereinstellvorrichtung mit modular dazu anordenbaren Prüfmitteln zur Prüfung von Umfelderfassungssystemen eines Kraftfahrzeuges. Die Prüfvorrichtung umfasst eine Prüfeinheit 1, die in einem Umgebungsbereich eines zu prüfenden Kraftfahrzeuges 2 positionierbar ist. Ferner weist die Prüfeinheit 1 zumindest ein Prüfmittel 3 zum Prüfen einer sicherheitstechnischen Einrichtung 4 eines Kraftfahrzeuges 2 mit zumindest einem Datenverarbeitungsmittel auf.

## Beschreibung

Die vorliegende Erfindung betrifft eine erste kompakte Prüfvorrichtung mit einer Prüfeinheit zur Prüfung von Kraftfahrzeug-Sensoren, die die Sicherheit für den Fahrer und andere Verkehrsteilnehmer erhöhen sollen, und eine kompakte Prüfanordnung umfassend die erste Prüfvorrichtung und eine zweite, die Scheinwerfer und andere Kraftfahrzeuglichter auf eine korrekte Einstellung bzw. Funktion prüft. Erfindungsgemäß wird ermöglicht, dass sicherheitstechnische Einrichtungen eines Kraftfahrzeuges, z.B. Abstandssensoren, und Fahrzeuglichter gleichzeitig und zeiteffizient geprüft werden können. Dies kann weitestgehend selbsttätig und manipulationssicher erfolgen. Die Prüfvorrichtung bzw. die Prüfanordnung ist modular zusammenstellbar.

Mit anderen Worten kann die Prüfvorrichtung bzw. das Prüfsystem gemäß der Erfindung autark in einer Werkstattumgebung arbeiten. Die Prüfvorrichtung bzw. das Prüfsystem sind modular aufgebaut und flexibel im Hinblick auf beliebige Umfeldsensorik von Kraftfahrzeugen erweiterbar. Die Erfindung stellt eine hinsichtlich Hardware und Software einheitliche Prüfplattform bereit, die mit dem Fahrzeug vernetzt werden kann und dazu geeignet sein kann, Messdaten automatisiert zu verarbeiten bzw. auszuwerten.

Es sind Prüfvorrichtungen bekannt, die zu einer Überprüfung der vorschriftsgemäßen Einstellung von lichttechnischen Einrichtungen, insbesondere Scheinwerfern, eines Kraftfahrzeuges herangezogen werden. Moderne Kraftfahrzeuge weisen zunehmend weitere Einrichtungen, insbesondere sicherheitstechnische Einrichtungen, auf, die ebenfalls einer regelmäßigen Prüfung unterzogen werden müssen, um deren einwandfreie technische Funktion zu gewährleisten. Beispielweise umfassen solche sicherheitstechnische Einrichtungen Kameras, die Verkehrsschilder lesen, Abstandssensoren, auf Basis deren Messdaten automatisch Bremsvorgänge eingeleitet werden, und dgl. Zur Prüfung dieser sicherheitstechnischen Einrichtungen existieren noch keine Prüfvorrichtungen, die mit den bestehenden Prüfvorrichtungen für lichttechnische Einrichtungen kombinierbar sind und gleichzeitig wenig komplex und kompakt aufgebaut sind.

Es ist eine Aufgabe der vorliegenden Erfindung eine Prüfvorrichtung und ein System umfassend die erfindungsgemäße Prüfvorrichtung bereitzustellen, die eine verbesserte Prüfung sicherheitstechnischer und/oder lichttechnischer Einrichtungen eines Kraftfahrzeuges ermöglichen, die gleichzeitig kompakt und modular aufgebaut sind.

Die Aufgabe wird von der Erfindung gemäß den unabhängigen Patentansprüchen gelöst. Weitere bevorzugte Weiterentwicklungen der Erfindung sind in den abhängigen Patentansprüchen beschrieben.

Die erfindungsgemäße Prüfvorrichtung zur Prüfung von sicherheitstechnischen Einrichtungen eines Kraftfahrzeuges kann insbesondere eine Scheinwerfereinstellvorrichtung mit einem oder mehreren modular dazu anordenbaren Prüfmitteln zur Prüfung von Umfelderfassungssystemen eines Kraftfahrzeuges sein. Die Prüfvorrichtung kann eine Prüfeinheit aufweisen, die in einem Umgebungsbereich eines zu prüfenden Kraftfahrzeuges positionierbar sein kann. Die Prüfeinheit kann zumindest ein Prüfmittel zum Prüfen einer sicherheitstechnischen Einrichtung eines Kraftfahrzeuges mit zumindest einem Datenverarbeitungsmittel aufweisen. Ferner kann das Prüfmittel dazu eingerichtet sein, die sicherheitstechnische Einrichtung für zumindest einen Messvorgang zu aktivieren und Messdaten des Messvorgangs über eine optionale Kommunikationsverbindung von der sicherheitstechnischen Einrichtung zu empfangen. Das Prüfmittel kann ferner dazu eingerichtet sein, die empfangenen Messdaten mittels des Datenverarbeitungsmittels zu verarbeiten.

Optional kann die Prüfvorrichtung mittels zumindest einer Kommunikationsverbindung mit dem Kraftfahrzeug verbindbar sein. Wenn eine (elektronische) Kommunikationsverbindung zwischen der Prüfeinheit und dem Kraftfahrzeug installiert ist, können Messdaten und andere Daten mit geringem Aufwand zwischen der Prüfvorrichtung und dem Kraftfahrzeug uni- oder bidirektional ausgetauscht werden.

Sicherheitstechnische Einrichtungen eines zu prüfenden Kraftfahrzeuges umfassen bevorzugt Fahrassistenzsysteme, die das Lenkverhalten auswerten und ggf. bei Verlassen einer Fahrspur oder bei Seitenwind eingreifen, die einen gewünschten, einstellbaren Abstand zu anderen Kraftfahrzeugen einhalten, die die Geradeausfahrt überwachen, die für den Fahrer automatisch Bremsen oder einen Bremsvorgang unterstützen, die Verkehrsschilder lesen und deren Informationen auswerten, die das Fahrlicht aktiv regeln, die beim Einparken den Fahrer unterstützen oder dies automatisch übernehmen, sowie diverse weitere Einrichtungen wie z.B. Rundumkameras, Nachtlichtkameras, Head-up-Displays und dgl. Diese sicherheitstechnischen Einrichtungen greifen zu einem großen Teil auf Messdaten von Sensoren und Kameras zurück. So wird der Abstand zu Hindernissen bzw. allgemein Objekten oder anderen Fahrzeugen bevorzugt mit elektromagnetischen Wellen bestimmt. Die Wellen werden von einem Sensor oder einem dem Sensor zugeordneten Emitter emittiert. Die Reflektion der emittierten Welle wird vom Sensor erfasst und ausgewertet. Die emittierten Wellen sind beispielsweise Radarwellen oder Ultraschallwellen. Ferner werden u.a. auch Lasersensoren sowie Kameras eingesetzt, um die oben genannten Sicherheitsfunktionen bereitzustellen.

Als Umgebungsbereich eines Kraftfahrzeuges ist hier insbesondere zu verstehen, dass das Kraftfahrzeug regelmäßig zur Überprüfung oder Reparatur/Wartung in einem Werkstattbereich oder dgl. aufgestellt wird und die Prüfvorrichtung auf einer Position in einem Bereich um das abgestellte Fahrzeug herum angeordnet wird. Beispielsweise wird die Prüfvorrichtung bei Prüfung einer Frontkamera des Kraftfahrzeuges bevorzugt mit einem vorbestimmten Abstand vor der Kraftfahrzeugfront angeordnet. Bei zu prüfenden Hecksensoren wird die Prüfvorrichtung bevorzugt in einem kraftfahrzeugrückwärtigen Bereich angeordnet.

Die Kommunikationsverbindung zwischen Prüfvorrichtung und Kraftfahrzeug kann insbesondere abhängig von den vorhandenen Anschlüssen am Kraftfahrzeug zum Beispiel eine Funkverbindung und/oder eine Kabelverbindung umfassen. Sollte keine Kommunikationsverbindung eingerichtet sein, so können die anfallenden (Mess-)daten beispielsweise auch vom Prüfpersonal direkt im Kraftfahrzeug abgelesen und überprüft werden.

Das Datenverarbeitungsmittel ist im einfachsten Fall eine integrierte CPU, bevorzugt mit einem daran angeschlossenen Speicherbaustein.

Das Aktivieren der sicherheitstechnischen Einrichtung erfolgt bevorzugt durch Vorgabe einer für die zu prüfende sicherheitstechnische Einrichtung einschlägige Situation. Bei einer Einrichtung, die den Fahrer mittels Auswertung von per Kamera eingelesener Verkehrsschilder über eine Geschwindigkeitsbegrenzung informiert, kann das Aktvieren derart ausgestaltet sein, dass das Prüfmittel ein Abbild eines Verkehrsschildes im Sichtbereich der Kamera darstellt, z.B. mittels eines Mikrobeamers bzw. Mikroprojektors.

Weiter kann z.B. ein Abstandssensor eines Kraftfahrzeuges, der Radarwellen abstrahlt und deren Reflektionen an Gegenständen erfasst, dadurch zu einem Messvorgang aktiviert werden, dass das entsprechende Prüfmittel die Radarwelle in einem vorbestimmten und zu erfassenden Abstand zum Kraftfahrzeug reflektiert.

Die Auswertung der Messdaten umfasst insbesondere das Speichern und Aufbereiten der Messdaten, um diese einem Kraftfahrzeugprüfer zur Verfügung zu stellen. Die Aufbereitung/Auswertung kann so weit gehen, dass anhand eines automatischen Vergleichs mit im Datenverarbeitungsmittel (und/oder einem Speicher) hinterlegten, vordefinierten Grenzwerten bzw. Prüfwerten ermittelt werden kann, ob die geprüfte sicherheitstechnische Einrichtung einwandfrei arbeitet. So kann z.B. bestimmt sein, dass bei einem zu messenden Abstand von 3 m zwischen Fahrzeug und einem simulierten Gegenstand und einem tatsächlich gemessenen Abstand von 3,01 m die Funktion des Abstandssensors als einwandfrei gewertet wird. Selbstverständlich kann die Prüfung auch je nach z.B. gesetzlichen Vorgaben auch strenger oder weniger streng eingestellt sein.

Vorteilhaft wird somit mittels der Prüfvorrichtung gemäß der Erfindung ermöglicht, dass sicherheitstechnische Einrichtungen eines Kraftfahrzeuges ohne großen Aufwand zuverlässig geprüft werden können. Der Aufbau der Prüfvorrichtung ist kompakt und wenig komplex.

Eines der Prüfmittel kann ein (Mikro-)Projektor sein, der eine Fahrsituation bildlich darstellt, um zumindest eine kamerabasierte sicherheitstechnische Einrichtung des zu prüfenden Kraftfahrzeuges zu aktivieren und zu einem Messvorgang zu veranlassen. Die Messdaten der kamerabasierten sicherheitstechnischen Einrichtung können mittels der optionalen Kommunikationsverbindung zwischen der Prüfeinheit und dem Kraftfahrzeug von dem Kraftfahrzeug an die Prüfeinheit übermittelt werden. Die Prüfeinheit kann die Messdaten verarbeiten. Der Mikroprojektor kann sehr kompakt aufgebaut sein, so dass er modular, z.B., an das Gehäuse einer Scheinwerfereinstellvorrichtung montiert werden kann.

Die bildliche Projektion einer Fahrsituation dient insbesondere der Auswertung der kamerabasierten sicherheitstechnischen Einrichtungen, z.B. der Verkehrsschildererfassung, des Spurhalteassistenten, der Einparkhilfe, etc. Je nach zu prüfender Funktion/Einrichtung kann mittels des Mikroprojektors eine entsprechende Situation dargestellt werden, um z.B. die Verkehrsschildererfassung des Kraftfahrzeuges auf einwandfreie Funktion zu prüfen. Weiter kann auch eine Person mittels des Mikroprojektors dargestellt werden, so dass die sicherheitstechnische Einrichtung überprüfbar ist, die mittels einer Kamera feststellt, ob sich Personen dem Kraftfahrzeug nähern.

Ein weiteres oder alternatives Prüfmittel kann ein Mittel zur Erzeugung von elektromagnetischen Wellen sein, das dazu geeignet ist, zumindest eine sicherheitstechnische Einrichtung des Kraftfahrzeugs, die auf Basis von elektromagnetischen Wellen arbeiten kann, zu aktivieren. Die Messdaten der sicherheitstechnischen Einrichtung, die auf Basis von elektromagnetischen Wellen arbeitet, können mittels der optionalen Kommunikationsverbindung zwischen der Prüfeinheit und dem Kraftfahrzeug von dem Kraftfahrzeug an die Prüfeinheit übermittelt werden. Die Prüfeinheit kann die Messdaten verarbeiten. Dieses Prüfmittel kann in Kombination zum Mikroprojektor oder separat dazu vorgesehen sein.

Die sicherheitstechnische Einrichtung, die auf Basis von elektromagnetischen Wellen arbeiten kann, kann einen Ultraschallsensor, einen Radarsensor und/oder einen Radiowellensensor umfassen, so dass alle wichtigen Wellenlängenbereiche prüfbar sind.

Das Prüfmittel kann ferner eine elektromagnetische Welle aussenden, die eine derartige Frequenz, Amplitude und/oder Modulation aufweisen kann, dass sie Eigenschaften einer Welle aufweisen kann, die einer Reflektion an einem Gegenstand in vorbestimmten Abstand zum Kraftfahrzeug entspricht, aus der die sicherheitstechnische Einrichtung den zu messenden Abstand ableiten kann.

Mit anderen Worten kann die technische Funktion der sicherheitstechnischen Einrichtung, die die elektromagnetische Wellen empfängt, um daraus z.B. einen Abstand zu einem Gegenstand/Objekt zu bestimmen, dadurch geprüft werden, dass das Prüfmittel dem Kraftfahrzeugsensor eine elektromagnetische Welle mit vorgegebenen Eigenschaften, wie Frequenz, Amplitude, Modulation, etc. zusendet. Die derart ausgeprägte Welle löst eine Reaktion der sicherheitstechnischen Einrichtung (in diesem Fall z.B. ein Sensor, der elektromagnetische Wellen empfängt) aus. Konkret ist die Welle derart ausgeprägt, dass der Kraftfahrzeugsensor "annimmt", dass eine Reflektion einer emittierten Welle von einem in einem vorgegebenen Prüfabstand zum Fahrzeug angeordneten Gegenstand/Objekt eingeht. Der Kraftfahrzeugsensor wertet die eingehende Welle dann aus und bestimmt dabei einen Abstand, den vorgegebenen Prüfabstand. Diesen Wert liest die Prüfvorrichtung dann aus bzw. bekommt sie vom Kraftfahrzeug über die Kommunikationsverbindung übermittelt, so dass die einwandfreie Funktion der sicherheitstechnischen Einrichtung geprüft werden kann. Dies kann die Prüfvorrichtung beispielsweise mittels vorgegebener Vergleichswerte bevorzugt automatisch durchführen. Wenn keine Kommunikationsverbindung installiert ist, können die Messwerte beispielsweise auch vom Prüfpersonal direkt an einem Bordcomputerdisplay des Kraftfahrzeuges abgelesen werden.

Weiterhin kann das Prüfmittel ein plattenförmiges Element aufweisen, das dazu eingerichtet sein kann, eine elektromagnetische Welle, die von einem zu überprüfenden Ultraschallsensor, einem Radarsensor und/oder einem Radiowellensensor oder einem dieser Sensoren zugeordneten Emitter gesendet werden kann, in einer bestimmten Distanz zu dem Ultraschallsensor, dem Radarsensor und/oder dem Radiowellensensor zu reflektieren.

Das plattenförmige Element ist ein alternatives oder zusätzliches Prüfmittel zu den oben beschriebenen Prüfmitteln, das einen zu messenden, vorbestimmten Abstand zu dem Kraftfahrzeug physisch vorgibt. Das plattenförmige Element kann an der Prüfvorrichtung z.B. zudem auch höhenverstellbar und/oder verdrehbar angeordnet sein, so dass es optimal vor einer zu prüfenden sicherheitstechnischen Einrichtung mit dem vorbestimmten Abstand positioniert und ausgerichtet werden kann. Ferner kann die elektromagnetische Welle auch von einem Emitter ausgesendet werden, der dem entsprechenden Sensor zugeordnet ist.

Weiterhin kann auch ein Laserstrahl ausgesendet werden, der von dem plattenförmigen Element reflektiert wird und von einem Lasersensor am Kraftfahrzeug erfasst wird. Neben der Erfassung des Abstandes zwischen dem Kraftfahrzeug und einem Gegenstand, z.B. dem plattenförmigen Element, können mit dem Prüfmittel auch solche sicherheitstechnischen Einrichtungen geprüft werden, die die Präsenz eines Gegenstandes/Objektes innerhalb eines bestimmten Radius um das Kraftfahrzeug herum feststellen.

Bei der Prüfung mittels des plattenförmigen Elementes, wie aber auch bei der Prüfung mit den übrigen Prüfmitteln, kann die Aktivierung des Messvorgangs auch dadurch erfolgen, dass über die Kommunikationsverbindung von der Prüfvorrichtung ein Befehl an das Kraftfahrzeug gesendet wird, die zu prüfende sicherheitstechnische Einrichtung zu einem Messvorgang zu veranlassen. Der Messvorgang kann dann z.B. das Aussenden eines Laserstrahls oder das Emittieren einer elektromagnetischen Welle (vom Kraftfahrzeug in Richtung der Prüfvorrichtung) umfassen.

Ferner kann ein erfindungsgemäßes System zumindest eine erste erfindungsgemäße Prüfvorrichtung aufweisen und eine zweite Prüfvorrichtung zur Überprüfung lichttechnischer Einrichtungen eines Kraftfahrzeuges. Die zumindest eine erste und die zweite Prüfvorrichtung können an einer Prüfanordnung angeordnet sein, die in einem Umgebungsbereich eines zu prüfenden Kraftfahrzeuges positionierbar sein kann. Die Prüfanordnung kann mittels zumindest einer optionalen Kommunikationsverbindung mit dem Kraftfahrzeug verbindbar sein. Die zweite Prüfvorrichtung kann eine Linse und ein Projektionsmittel aufweisen, um ein von einer lichttechnischen Einrichtung des Kraftfahrzeuges abgestrahltes Licht mittels der Linse auf dem Projektionsmittel abzubilden und dort ein Lichtabbild zu erzeugen.

Die zweite Prüfvorrichtung ist bevorzugt eine Scheinwerferprüfvorrichtung, wobei das Projektionsmittel beispielsweise ein Bildschirm oder eine Leinwand ist, auf dem das von den Fahrzeugscheinwerfern/-lichtern abgestrahlte Licht abgebildet werden kann. Die Form und Lage des Abbildes ermöglicht zu prüfen, ob die Fahrzeugscheinwerfer/-lichter vorschriftsgemäß eingestellt sind.

Die erfindungsgemäße Kombination beider Prüfvorrichtungen in einem System ermöglicht, das ein kompaktes Prüfgerät bereitgestellt wird, das eine gleichzeitige und weniger zeitaufwendige Prüfung der wichtigsten Fahrzeugeinrichtungen aus den Bereichen Lichttechnik und Sicherheitstechnik erlaubt.

Die Prüfanordnung kann derart modular aufgebaut sein, dass zumindest ein oder mehrere erste erfindungsgemäße Prüfvorrichtungen mit der Prüfanordnung lösbar verbindbar sein können. Die einzelnen Prüfvorrichtungen bzw. Prüfmittel können beispielsweise aufsteckbar oder mittels schnell lösbarer Schraubverbindungen befestigbar sein. Je nach Prüfbedarf kann flexibel eine genau auf den Anwendungsfall zugeschnittene Prüfanordnung zusammengestellt werden.

Die Prüfanordnung kann auf Schienen und/oder Rädern verfahrbar sein. Dies ermöglicht eine schnelle und wenig komplexe Positionierung der Prüfanordnung im Umgebungsbereich des zu prüfenden Kraftfahrzeugs.

Die Prüfanordnung kann einen Antrieb und eine Steuereinheit aufweisen, so dass die Prüfanordnung mittels Steuerbefehlen von der Steuereinheit selbsttätig verfahrbar sein kann. Bevorzugt kann die Prüfanordnung automatisch positionierbar sein. Dies ermöglicht, dass ein vollautomatisierter Prüfroboter bereitgestellt werden kann, der die Prüfvorgänge fast oder vollständig selbsttätig abarbeiten kann. Das automatische Positionieren kann dadurch realisiert sein, dass die Prüfanordnung über Sensoren verfügt, die die Position der Prüfanordnung z.B. in einer Werkstatthalle erfasst und mittels eines vorgegebenen Koordinatensystems bestimmte Koordinaten ansteuern kann. So kann z.B. von einem Bediener in das Datenverarbeitungsmittel der Prüfanordnung eingegeben worden sein, dass ein Kraftfahrzeug, das zu überprüfen ist, auf einer bestimmten Koordinatenposition abgestellt wurde und es sollen beispielsweise die Front- und Hecksensoren/-lichter geprüft werden. Das Datenverarbeitungsmittel errechnet dann automatisch anhand der Positionskoordinaten des Kraftfahrzeuges die Positionen, an denen die Prüfanordnung positioniert werden muss, um die Prüfungen durchzuführen. Wenn diese errechnet wurden, werden Steuerbefehle an einen Antrieb der z.B. Räder übermittelt, die Positionen anzufahren. An den entsprechenden Positionen können vorgegebene Prüfprogramme automatisch durchgeführt werden.

Ferner kann die Prüfvorrichtung bzw. die Prüfanordnung auch mittels Spracherkennung steuerbar sein. Dazu kann beispielsweise eine fahrzeuginterne Sprachsteuerungseinrichtung herangezogen werden, die ebenfalls mittels der Kommunikationsverbindung mit der Prüfvorrichtung bzw. der Prüfanordnung verbunden ist. Der Bediener kann dann im zu prüfenden Kraftfahrzeug sitzend die Prüfung per Spracheingaben in die Sprachsteuerungseinrichtung steuern.

Die Prüfanordnung kann eine Niveauregulierungseinrichtung aufweisen, die dazu geeignet sein kann, selbststätig mittels eines Neigungssensors zu erfassen, ob die Prüfanordnung waagrecht ausgerichtet ist. Falls die Prüfanordnung nicht waagrecht ausgerichtet sein sollte, kann die Niveauregulierungseinrichtung die Prüfanordnung in eine waagrechte Ausrichtung verfahren. Die Funktion der selbsttätigen Ausrichtung ist insbesondere auch im Hinblick auf die Vermeidung möglicher Manipulationen vorgesehen, so dass nicht durch eine unbewusste oder bewusste Fehlpositionierung der Prüfanordnung Messwerte verfälscht werden können.

Die Niveauregulierungseinrichtung kann eine Raumorientierungs-Einrichtung aufweisen, die dazu eingerichtet ist, eine räumliche Positionierung der Niveauregulierungseinrichtung in Relation zu einem vorbestimmten Nullpunkt automatisch zu erfassen. Alternativ oder zusätzlich kann die Niveauregulierungseinrichtung eine Niveauerfassungseinrichtung aufweisen, die dazu eingerichtet ist, eine Höhe der Niveauregulierungseinrichtung über einer Aufstandsebene, z.B. einem Werkstattboden, zu erfassen.

Ferner kann die Raumorientierungs-Einrichtung zur automatischen räumlichen Orientierung Abstandssensoren aufweisen und/oder ein GPS-Modul. Alternativ oder zusätzlich kann die Prüfanordnung, insbesondere bei einem Einbau, mit bereits vorhandenen Prüfplatzsystemen einer Werkstatt synchronisierbar und anpassbar sein.

Diese Funktionen sind bevorzugt weitere Elemente, die einen vollständig automatisch agierenden Prüfroboter ermöglichen, der gegen Manipulation von außen geschützt ist. Ein vorbestimmter Nullpunkt kann z.B. eine x,y-Koordinate oder eine GPS-Position sein, die in einen im Werkstattbereich festgelegt ist und auf die die Prüfanordnung nach einer erfolgten Prüfung immer automatisch zurückfährt. Ferner kann die Niveauerfassungseinrichtung auch dazu vorgesehen sein, die Höhe einzelner Prüfmittel über einer Referenzebene, z.B. dem Werkstattboden, festzustellen, so dass die Prüfmittel auch vertikal sehr exakt ausgerichtet werden können.

Die Prüfanordnung kann derart eingerichtet sein, dass eine vollautomatisierte Prüfung eines Kraftfahrzeuges, insbesondere der sicherheitstechnischen und lichttechnischen Einrichtungen des Kraftfahrzeuges, ermöglichbar ist mittels selbsttätigem Verfahren der Prüfeinheit und vordefinierten Prüfprogrammabläufen. Dazu können insbesondere Prüfverfahren in Form von Computerprogrammen, die das Datenverarbeitungsmittel ausführt, in der Prüfanordnung hinterlegt/gespeichert sein, die bevorzugt auf bestimmte Kraftfahrzeugtypen, zu prüfenden Einrichtungen, etc. angepasst sind. Weiter kann die gemeinsame Prüfeinheit eine Datenbank in einem standardisierten Datenformat aufweisen. In der Datenbank können Funktionen und Prüfabfragen und ein Zugriff auf die sicherheitstechnischen und/oder lichttechnischen Einrichtungen des Kraftfahrzeuges mittels physikalischer und kommunikationstechnischer Zugriffsmechanismen, die unter anderem standardisierte Kommunikationsprotokolle umfassen können, beschrieben sein. Die erforderlichen Daten werden in entsprechenden, bevorzugt standardisierten Datenformaten, beispielsweise gemäß dem Open Diagnostic Data Exchange (ODX)-Standard, bereitgestellt.

Zusammenfassend ermöglicht die Erfindung somit, dass die Prüfung von sicherheitstechnischen und lichttechnischen Einrichtungen eines Kraftfahrzeuges gleichzeitig und mit weniger Zeitaufwand von einem Prüfsystem geprüft werden können und dies bevorzugt vollautomatisch und manipulationssicher erfolgen kann.

Die Erfindung wird im Folgenden exemplarisch mit Bezug auf die beigefügten, schematischen Zeichnungen beschrieben. Es zeigen
Fig. 1 eine modular aufgebaute Prüfvorrichtung zur Prüfung von sicherheitstechnischen Einrichtungen eines Kraftfahrzeuges,
Fig. 2 eine Skizze der modular aufgebauten Prüfanordnung/Prüfvorrichtung vor einem Kraftfahrzeug,
Fig. 3 eine weitere Skizze der modular aufgebauten Prüfanordnung/Prüfvorrichtung vor einem Kraftfahrzeug und
Fig. 4 eine Skizze der modular aufgebauten Prüfanordnung angeordnet an einer Verfahreinrichtung.

Im Folgenden werden verschiedene Ausführungsbeispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Ausführungsbeispiele und Kombination von Merkmalen verschiedener Ausführungsbeispiele im Rahmen des Schutzumfangs der unabhängigen Ansprüche.

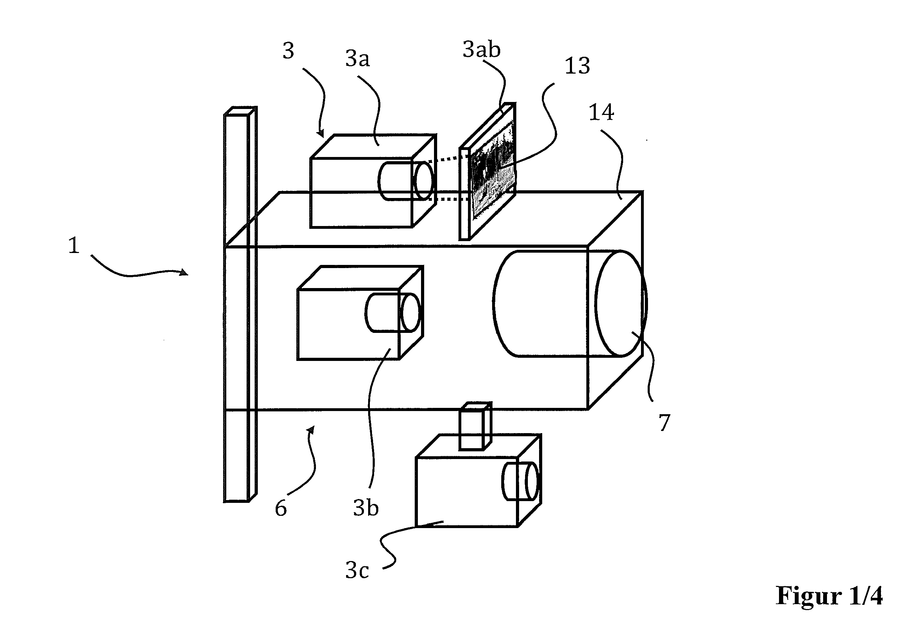

Figur 1 zeigt eine modular aufgebaute Prüfeinheit 1, die mehrere Prüfmittel 3 zur Prüfung von sicherheitstechnischen Einrichtungen 4 eines Kraftfahrzeuges 2 aufweist. Diese sind lösbar mit der Prüfeinheit 1 verbunden, beispielsweise mittels Steck- oder Schraubverbindungen. Konkret weist die gezeigte Prüfeinheit 1 einen Projektor 3a auf, der bevorzugt ein kompakter Mikroprojektor ist und der ein Bild 13 auf eine Leinwand 3ab vor dem Projektor 3a projiziert. Bevorzugt ist auch die Leinwand 3ab kompakt und an der Prüfeinheit 1 angeordnet. Das Bild 13 stellt eine typische Verkehrsszene dar, wenn ein Kraftfahrzeug 2 auf einer Straße bewegt wird. So kann ein projiziertes Bild 13 zum Beispiel eine Szene wiedergeben, in der sich ein Kraftfahrzeug 2 in einer städtischen Umgebung mit vielen anderen Verkehrsteilnehmern, wie anderen Kraftfahrzeugen 2, Fahrrädern, Fußgängern, und einer Vielzahl Verkehrszeichen und Ampeln befindet. Ebenso kann auch ein Bild 13 einer Fahrt über eine Autobahn oder eine Landstraße dargestellt sein, bei der am Fahrbahnrand z.B. ein Verkehrsschild positioniert ist. Weitere Bilddarstellungen sind selbstverständlich möglich.

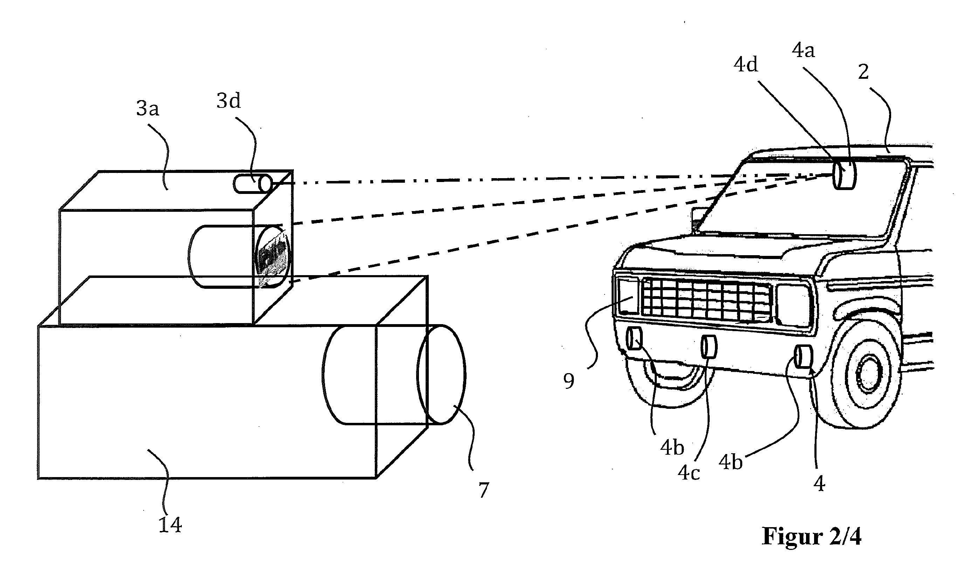

Weiterhin ist an der in Figur 1 dargestellten Prüfeinheit 1 ein weiteres Prüfmittel 3b angeordnet, das dazu geeignet ist, sicherheitstechnische Einrichtungen 4, 4b eines Kraftfahrzeuges 2 zu prüfen. Die sicherheitstechnischen Einrichtungen 4, 4b können elektromagnetische Wellen empfangen, um daraus fahrsicherheitsrelevante Informationen abzuleiten. Diese Informationen umfassen insbesondere einen Abstand zwischen dem Kraftfahrzeug 2 und einem im Umgebungsbereich des Kraftfahrzeuges 2 angeordneten Objektes. Ferner kann alternativ auch lediglich die Präsenz eines Objektes im Umgebungsbereich des Kraftfahrzeuges 2 angezeigt werden. Das dargestellte Prüfmittel 3b zur Prüfung der auf einem Empfang elektromagnetischer Wellen basierenden Informationen arbeitender sicherheitstechnischer Einrichtung 4b sendet eine elektromagnetische Welle, z.B. eine Ultraschallwelle oder eine Radarwelle, aus, die von der sicherheitstechnischen Einrichtung 4b (s. Fig. 2) empfangen wird. Die ausgesendete Welle weist eine Modulation, Amplitude und/oder Frequenz auf bzw. allgemein gesagt, sie beinhaltet eine Information, die bei einem Empfangen mittels der sicherheitstechnischer Einrichtung 4b ausgewertet werden kann. Mit anderen Worten sendet das Prüfmittel 3b eine Welle aus, die Informationen übermittelt, mit denen die korrekte Funktionsfähigkeit der empfangenden sicherheitstechnischen Einrichtung 4b geprüft werden kann. Die vorbestimmte Information kann z.B. eine Information über einen zu messenden Abstand zwischen einem Objekt und dem Kraftfahrzeug 2 sein. Die von dem Prüfmittel 3b ausgesendete elektromagnetische Welle, kann somit derartige Eigenschaften aufweisen, dass die die Welle empfangende sicherheitstechnische Einrichtung 4b "denkt" es liege eine von einem Objekt in einem vorbestimmten und zu bestimmenden Abstand reflektierten Welle vor. Dies veranlasst die sicherheitstechnische Einrichtung 4b und/oder eine zugeordnete Datenverarbeitungseinheit aktiv zu werden und die Messdaten auszuwerten. Diese können anschließenden z.B. mittels einer Kabeldatenverbindung oder einer Funkdatenverbindung zurück an die Prüfeinheit 1 gesendet werden.

Desweiteren zeigt die Figur 1 ein Prüfmittel, dass ein Laserscannerprüfsystem 3c ist. Moderne Kraftfahrzeuge weisen häufig auch sicherheitstechnische Einrichtungen 4 auf, die Laserscanner 4c umfassen. Laserscanner 4c werden zum Beispiel dazu verwendet, die in Fahrtrichtung eines Kraftfahrzeuges 2 vorausliegende Fahrbahnbeschaffenheit zu erfassen oder auch zur Abstandsmessung. Laserscanner 4c eines Kraftfahrzeuges weisen bevorzugt einen oder mehrere Laser sowie einen oder mehrere Sensoren auf.

Das Laserscannerprüfsystem 3c kann die oben beschriebenen Laserscanner 4c eines Kraftfahrzeuges 2 prüfen. Es kann eine mögliche Funktionsweise des Laserscannerprüfsystem 3c sein, dass mit einem Prüflaser des Laserscannerprüfsystems 3c die Sensoren des Laserscanners 4c angeregt werden. Nach der Anregung können mittels der Sensoren des Laserscannerprüfsystems 3c die Laser des zu prüfenden Fahrzeugs geprüft werden. Die Prüfung lässt sich in drei Modi einteilen: Bei der aktiven Prüfung werden spezielle Laserreflektionsmuster vorgespielt, die typischerweise bei entsprechenden Hindernissen, einem bestimmten Abstand zu einem anderen Objekt bzw. bei Fahrbahnunebenheiten auftreten. Bei der passiven Prüfung wird der Laser des Laserscanners 4c des zu prüfenden Fahrzeugs überprüft. Bei einer kombinierten Prüfung werden Reaktionstests des zu prüfenden Fahrzeugsystems, insbesondere des Laserscanners 4c, auf Prüfmuster und Prüfsignale durchgeführt. Die Prüfsignale entsprechen z.B. den Signalen von (simulierten) Hindernissen, vorrausfahrenden Fahrzeuge oder dgl.

Ferner kann das Laserscannerprüfsystem 3c zur Erfassung von Abständen zwischen einem Kraftfahrzeug 2 und anderen Objekten, z.B. einem weiteren Kraftfahrzeug, beispielsweise auch einen Laserstrahl in Richtung des Laserscannerprüfsystem 3c abstrahlen, der von dem Laserscanner 4c am Kraftfahrzeug 2 erfasst wird. Der erfasste Laserstrahl aktiviert den Laserscanner 4c des Kraftfahrzeuges 2 und es wird beispielsweise der Abstand zwischen dem Laserscannerprüfsystem 3c, von dem der Laserstrahl ausgestrahlt wurde, und dem Laserscanner 4c am Kraftfahrzeug 2 gemessen.

Bei der oben beschriebenen Abstandsmessung besteht die optionale Möglichkeit, dass eine Information mittels der Datenverbindung bzw. Kommunikationsverbindung von der Prüfeinheit 1 zu dem Kraftfahrzeug 2 bzw. zu einem Datenverarbeitungsmittel des Laserscanners 4c übermittelt wird, die die Laufzeit des an dem Laserscanner 4c empfangenen Laserstrahls enthält. Mittels der Laufzeit kann der künstlich vorgegebene Abstand zwischen dem Laserscannerprüfsystem 3c und dem Laserscanner 4c berechnet werden. Diese Möglichkeit der Prüfung der Abstandserfassung lässt sich ferner auch auf die Messung mittels elektromagnetischer Wellen mit dem entsprechenden Prüfmittel 3b übertragen, so dass die elektromagnetische Welle dann lediglich zum Aktivieren der sicherheitstechnischen Einrichtung 4b verwendet wird und ein künstlich im Rahmen des Prüfprogramms vorgegebener Abstand mittels einer von der Prüfeinheit 1 an das Kraftfahrzeug 2 gesendeten Laufzeitinformation der Welle übertragen wird.

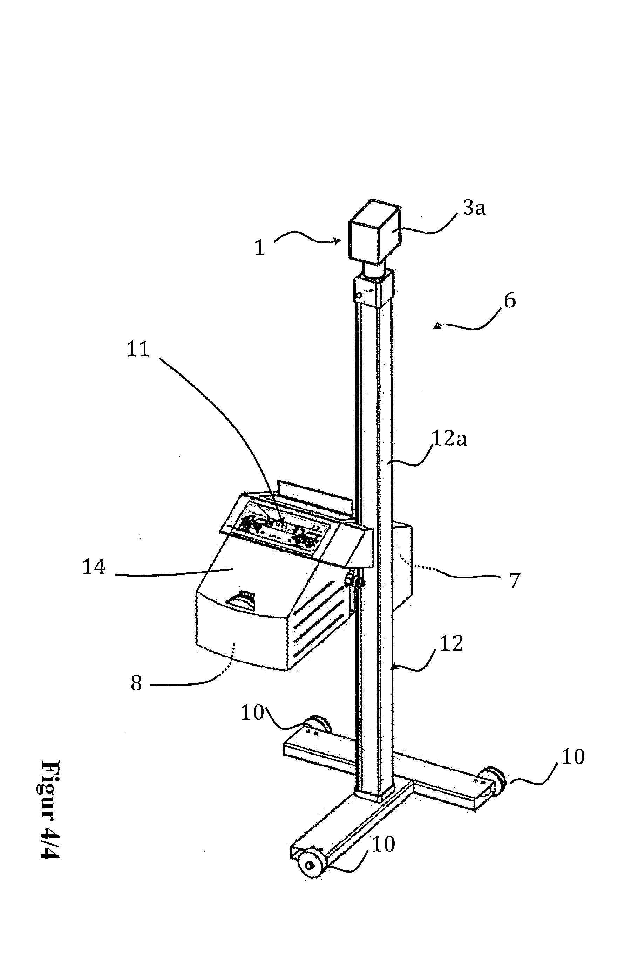

Zusätzlich oder alternativ zu den oben beschriebenen Prüfmitteln 3 kann ein nicht gezeigtes plattenförmiges Element an der Prüfeinheit 1 oder einer Prüfanordnung 6 (s. Figur 4) angeordnet werden, das Laserlicht von der Prüfeinheit 1/Prüfanordnung 6 zurück zum Laserscanner 4c reflektiert. Das Laserlicht kann z.B. von einem Laser des Laserscanners 4c ausgesendet werden. Das reflektierte Licht kann von einem Sensor des Laserscanners 4c hinsichtlich eines zu bestimmenden Prüfabstandes zwischen Kraftfahrzeug 2 und plattenförmigen Element 5 ausgewertet werden. In der gleichen Weise kann das plattenförmige Element 5 auch dazu geeignet sein, elektromagnetische Wellen, die von der auf Basis solcher arbeitenden sicherheitstechnischen Einrichtung 4b oder einem diesen zugeordneten Emittern ausgesendet werden, zu reflektieren.

Ferner zeigt die Figur 1 auch die optionale Kombination aus der Prüfeinheit 1 mit mehreren Prüfmitteln 3 und einer zweiten Prüfvorrichtung zur Prüfung lichttechnischer Einrichtungen 9 eines Kraftfahrzeuges 2. Die lichttechnischen Einrichtungen umfassen insbesondere Scheinwerfer, Blinker, Rücklichter und weiterer Kraftfahrzeuglichter. Die Prüfvorrichtung zur Prüfung der lichttechnischen Einrichtungen 9 ist in einem Gehäuse 14 angeordnet und weist im Wesentlichen eine Linse 7 und ein Projektionsmittel 8 auf. Das von den lichttechnischen Einrichtungen 9 abgestrahlte Licht, insbesondere das der Frontscheinwerfer, wird von der Linse 7 gebündelt und auf das Projektionsmittel 8 projiziert. Das auf dem Projektionsmittel 8 dargestellte Abbild des Lichtes der lichttechnischen Einrichtungen 9 ermöglicht die Überprüfung, ob die Scheinwerfer z.B. im Hinblick auf eine Höhenausrichtung korrekt eingestellt sind. Die Überprüfung kann von einem Bediener der Prüfanordnung 6 vorgenommen werden, indem er das Abbild auf dem Projektionsmittel 8 selbst inspiziert. Alternativ oder zusätzlich kann das Projektionsmittel 8 auch ein lichtempfindlicher Bildschirm oder eine Kamera innerhalb der Prüfanordnung 6 sein, so dass das Abbild elektronisch erfasst und von einem Datenverarbeitungsmittel der Prüfanordnung 6 automatisch ausgewertet werden kann.

Die Figur 2 zeigt einen Teil der Prüfanordnung 6 aufweisend den Projektor 3a und die Prüfvorrichtung für die lichttechnischen Einrichtungen 9. Weiter ist ein Kraftfahrzeug 2 gezeigt, das mit einer Frontseite zur Prüfanordnung ausgerichtet ist. Das Kraftfahrzeug weist die sicherheitstechnischen Einrichtungen 4 auf, wobei die gezeigten sicherheitstechnischen Einrichtungen 4 Sensoren 4b zum empfangen von elektromagnetischen Wellen sind. Die beispielhaft im Bereich der Frontscheibe gezeigte sicherheitstechnische Einrichtung 4 weist eine Kamera 4a und einen Lasersensor 4d auf. Die dargestellte Prüfsituation zeigt, dass der Mikroprojektor 3a ein Bild einer Fahrszene projiziert, das von der Kamera 4a erfasst wird. Dadurch wird die Kamera und die daran angeschlossene Datenverarbeitungsvorrichtung dazu veranlasst, zumindest einen Messvorgang durchzuführen. Der Messvorgang der Kamera 4a umfasst, dass das projizierte Bild des Projektors 3a erfasst wird und die dargestellten Informationen ausgewertet werden. Beispielsweise kann das Bild ein Verkehrszeichen enthalten, das eine Geschwindigkeitsbegrenzung anzeigt. Diese Information wird von der Kamera 4a erfasst und dahingehend ausgewertet, dass z.B. einem Fahrzeugführer auf einem Bildschirm die aktuelle Geschwindigkeitsbegrenzung ausgegeben wird. Gleichzeitig wird während des Prüfvorgangs die ausgewertete Information mittels der Datenverbindung an die Prüfanordnung 6 bzw. die Prüfeinheit 1 übermittelt. Dort werden die Informationen derart verarbeitet, dass überprüft wird, ob die Auswertung des angezeigten Bildes seitens der Kamera 4a bzw. der angeschlossenen Datenverarbeitungsvorrichtung zu einer Übereinstimmung zwischen dem Auswertungsergebnis und den Informationen des angezeigten Bildes geführt hat. In diesem Fall wird von der Prüfeinheit 1 automatisch ausgegeben, dass die Prüfung beanstandungsfrei durchgeführt wurde.

Weiterhin zeigt die Figur 2 einen Positionslaser 3d. Dieser wird dazu benutzt, die Prüfeinheit 1/Prüfanordnung 6 mit dem Kraftfahrzeug 2 nach den Prüfvorgaben auszurichten. Dies erfolgt beispielsweise dadurch, dass die Prüfanordnung 6 solange ausgerichtet wird, z.B. automatisch oder durch einen Bediener, bis der Laserstrahl des Positionslasers 3d auf den Laserscanner 4d am Kraftfahrzeug 2 fällt. Ferner ist anzumerken, dass die Prüfeinheit 1/Prüfanordnung 6 nicht nur vor einer Frontseite der Kraftfahrzeuges 2 positionierbar ist. Je nach Prüfprogramm kann die Prüfeinheit 1/Prüfanordnung 6 auch anders zum Kraftfahrzeug 2 angeordnet werden, beispielsweise in einem rückwärtigen Bereich des Kraftfahrzeuges 2, wenn z.B. Hecksensoren geprüft werden sollen.

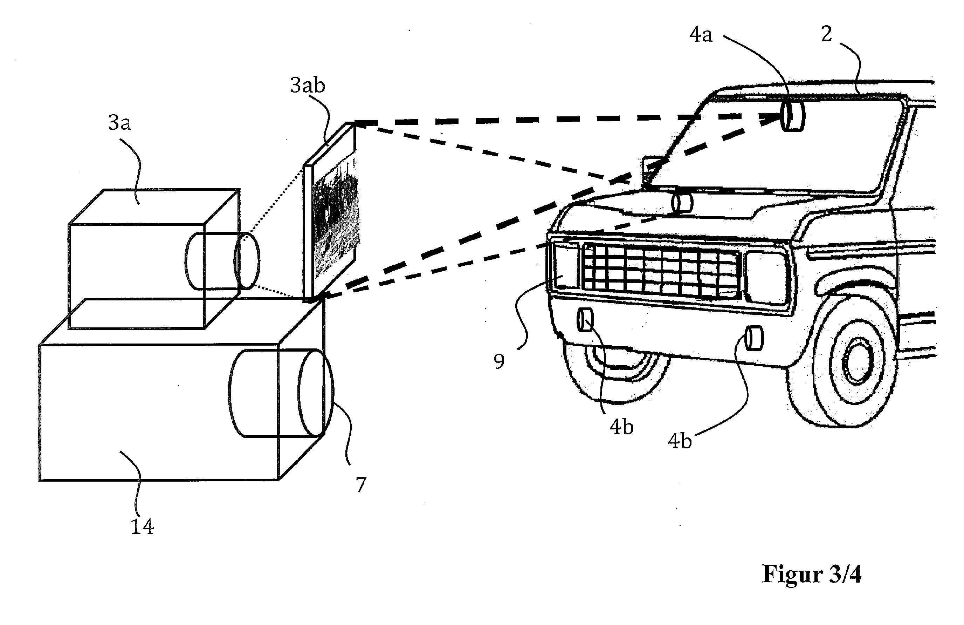

Figur 3 zeigt wie die Figur 2, dass mittels des Projektors 3a ein Bild projiziert wird, das eine Fahrszene anzeigt. Der Projektor 3 projiziert das Bild auf eine externe Leinwand 3ab, die bevorzugt an der Prüfeinheit 1/Prüfanordnung 6 angeordnet ist. Figur 2 zeigt, dass das projizierte Bild an einer Fläche projiziert wird, die innerhalb des Projektors 3a angeordnet ist. Ferner zeigt Figur 3, dass das Kraftfahrzeug 2 eine weitere sicherheitstechnische Einrichtung 4 im Bereich der Kühlerhaube aufweist. Die kann eine weitere Kamera 4a sein oder ein Laserscannersystem 4c. Die Strichlinien bzw. Strichpunktlinien der Figuren 3 und 4 zeigen schematisch Strahlengänge von Lichtstrahlen bzw. allgemein elektromagnetischen Wellen.

Figur 4 zeigt die Prüfanordnung 6 mit dem Gehäuse 14 der Prüfvorrichtung, die zum Prüfen der lichttechnischen Einrichtung 9 geeignet ist. An der Vorderseite des Gehäuses 14 ist die Linse 7 angeordnet. Im Inneren des Gehäuses 14 ist das Projektionsmittel 8 vorgesehen. An dem Gehäuse 14 ist ferner eine Steuereinheit 11 angeordnet, die die Datenverarbeitungsmittel, Speicher und ggf. einen Bildschirm zu Bedienung und Steuerung der Prüfanordnung 6 aufweist. Ferner enthält die Steuereinheit 11 auch bevorzugt einen Sender-Empfänger zum Aufbau der Kommunikationsverbindung mit dem Kraftfahrzeug. Das Gehäuse 14 ist an einer Verfahreinrichtung 12 höhenverstellbar befestigt. Die Höhenverstellbarkeit entlang einer vertikalen Säule 12a der Verfahreinrichtung 12 erfolgt manuell oder automatisch mittels Verfahrbefehlen von der Steuereinheit 11 und einem nicht gezeigten Antrieb. Die Verfahreinrichtung 12 ermöglicht mittels der dargestellten Rollen 10, dass die Prüfanordnung 6 mit wenig Aufwand an eine vorgesehen Position in einer Werkstatt verfahren werden kann. Das Verfahren wird von einem Bediener der Prüfanordnung 6 vorgenommen oder der nicht gezeigte Antrieb treibt die Rollen 10 gemäß Steuerbefehlen der Steuereinheit 11 an, so dass diese selbsttätig zu einer vorbestimmten Prüfposition verfahren kann.

Am oberen Ende der Säule 12a ist ein Prüfmittel 3 befestigt. Hier ist schematisch und beispielhaft ein Mikroprojektor 3a dargestellt. Weitere oder alternative Prüfmittel können an der gezeigten Prüfanordnung 6 lösbar befestigt werden. Beispielsweise können weitere Prüfmittel 3 an der Säule 12a höhenverstellbar befestigt sein.

Im Hinblick auf eine möglichst automatische, wenig aufwendige und standardisierbare Prüfung weist bevorzugt die Steuereinheit 11 eine Datenbank in einem standardisierten Datenformat auf, in der Funktionen und Prüfabfragen und ein Zugriff auf die sicherheitstechnischen und/oder lichttechnischen Einrichtungen des Kraftfahrzeuges mittels eines Kommunikationsprotokolls beschrieben sind. Die erforderlichen Daten werden in entsprechenden Datenformaten bereitgestellt, die den aktuellen Standards entsprechen können. Insbesondere für eine Fahrzeugdiagnose haben Fahrzeughersteller oder auch Drittanbieter verschiedene Mess- und Prüfprotokolle entwickelt. Bei einer Ausführung des Prüfprotokolls liest eine an eine elektronische Steuervorrichtung des Kraftfahrzeuges 2 angeschlossene externe Diagnosevorrichtung, z.B. die Prüfanordnung 6 oder die einzelnen Prüfmittel 3, die erforderlichen Diagnosewerte von der fahrzeuginternen elektronischen Steuervorrichtung aus. Konkret kommuniziert die externe Diagnosevorrichtung über das vorgegebene, standardisierte Kommunikationsprotokoll, dem Diagnoseprotokoll, mit den einzelnen Elektronikkomponenten, den sogenannten elektronischen Steuergeräten des Fahrzeugs. Als Bindeglied zwischen der Diagnosevorrichtung und dem Fahrzeug dienen die Diagnosedaten. Derartige Diagnosedaten entsprechenden Diagnosestandards. Hierzu sei bspw. auf die ISO-Normen u.a. ODX, OTX, sowie die standardisierten Diagnoseprotokolle verwiesen. Diagnosedaten beschreiben das verwendete Diagnoseprotokoll, die einzelnen Befehle, deren mögliche Antworten vom Steuergerät und die Interpretation der Daten, zum Beispiel deren Umrechnung in physikalische Werte.

Zusammenfassend ist festzuhalten, dass die erfindungsgemäße Prüfvorrichtung mit der Prüfeinheit 1 und die Prüfanordnung 6 sehr kompakt sind und modular je nach Prüfprogramm zusammengestellt werden können, z.B. indem einzelne Prüfmittel 3 an der Prüfeinheit 1 befestigt werden oder abgenommen werden. Die Kombination der Prüfeinheit 1 mit der Prüfvorrichtung zur Prüfung der lichttechnischen Einrichtungen 9 ermöglicht eine besonders zeiteffiziente Prüfung, da gleichzeitig die sicherheitstechnischen und lichttechnischen Einrichtungen 4, 9 geprüft werden können. Die Möglichkeit, dass mittels der Steuereinheit 11 und Sensoren eine weitestgehend selbsttätige Prüfung im Sinne eines Prüfroboters durchführbar ist, reduziert den Personalaufwand und macht die Prüfanordnung 6 manipulationssicher.

## Patentansprüche

1. Prüfvorrichtung zur Prüfung von sicherheitstechnischen Einrichtungen eines Kraftfahrzeuges, insbesondere eine Scheinwerfereinstellvorrichtung mit modular dazu anordenbaren Prüfmitteln zur Prüfung von Umfelderfassungssystemen eines Kraftfahrzeuges, mit
- einer Prüfeinheit (1), die in einem Umgebungsbereich eines zu prüfenden Kraftfahrzeuges (2) positionierbar ist,
- die Prüfeinheit (1) zumindest ein Prüfmittel (3) zum Prüfen einer sicherheitstechnischen Einrichtung (4) des Kraftfahrzeuges (2) mit zumindest einem Datenverarbeitungsmittel aufweist, wobei
- das Prüfmittel (3) dazu eingerichtet ist, die sicherheitstechnische Einrichtung (4) für zumindest einen Messvorgang zu aktivieren und Messdaten des Messvorgangs von der sicherheitstechnischen Einrichtung (4) zu empfangen, wobei
- das Prüfmittel (3) ferner dazu eingerichtet ist, die empfangenen Messdaten mittels des Datenverarbeitungsmittels zu verarbeiten.

2. Prüfvorrichtung nach Patentanspruch 1, **gekennzeichnet dadurch, dass**
das Prüfmittel (3) ein Projektor (3a) ist, der eine Fahrsituation bildlich darstellt, um zumindest eine kamerabasierte sicherheitstechnische Einrichtung (4a) des zu prüfenden Kraftfahrzeuges (2) zu aktivieren und zu einem Messvorgang zu veranlassen, wobei
Messdaten der kamerabasierten sicherheitstechnischen Einrichtung (4a) mittels einer Kommunikationsverbindung zwischen der Prüfeinheit (1) und dem Kraftfahrzeug (2) von dem Kraftfahrzeug (2) an die Prüfeinheit (1) übermittelt werden und die Prüfeinheit (1) die Messdaten verarbeitet.

3. Prüfvorrichtung nach zumindest einem der voranstehenden Patentansprüche, **gekennzeichnet dadurch, dass** das Prüfmittel (3) ein Mittel zur Erzeugung von elektromagnetischen Wellen ist, das dazu geeignet ist zumindest eine sicherheitstechnische Einrichtung (4) des Kraftfahrzeugs (2), die auf Basis von elektromagnetischen Wellen arbeitet, zu aktivieren, wobei
Messdaten der sicherheitstechnischen Einrichtung (4), die auf Basis von elektromagnetischen Wellen arbeitet, mittels einer Kommunikationsverbindung zwischen der Prüfeinheit (1) und dem Kraftfahrzeug (2) von dem Kraftfahrzeug (2) an die Prüfeinheit (1) übermittelt werden und die Prüfeinheit (1) die Messdaten verarbeitet.

4. Prüfvorrichtung nach Patentanspruch 3, **gekennzeichnet dadurch, dass** die sicherheitstechnischen Einrichtung (4), die auf Basis von elektromagnetischen Wellen arbeitet, einen Ultraschallsensor, einen Radarsensor und/oder einen Radiowellensensor umfasst.

5. Prüfvorrichtung nach zumindest einem der Patentansprüche 3 - 4, **gekennzeichnet dadurch, dass** das Prüfmittel (3) eingerichtet ist, eine elektromagnetische Welle auszusenden, die eine derartige Frequenz, Amplitude und/oder Modulation aufweist, dass die ausgesendete Welle Eigenschaften einer Welle aufweist, die einer Reflektion an einem Gegenstand in vorbestimmten Abstand zum Kraftfahrzeug (2) entspricht, aus der ein von der sicherheitstechnischen Einrichtung (4) zu messender Abstand ableitbar ist.

6. Prüfvorrichtung nach Patentanspruch 3, **gekennzeichnet dadurch, dass** das Prüfmittel (3) zur Prüfung der sicherheitstechnischen Einrichtung (4), die auf Basis von elektromagnetischen Wellen arbeitet, ein plattenförmiges Element (5) aufweist, das dazu eingerichtet ist, eine elektromagnetische Welle, die von einem zu überprüfenden Ultraschallsensor, einem Radarsensor und/oder einem Radiowellensensor gesendet wird, in einer bestimmten Distanz zu dem Ultraschallsensor, dem Radarsensor und/oder dem Radiowellensensor zu reflektieren.

7. Prüfsystem mit
- zumindest einer ersten Prüfvorrichtung nach zumindest einem der voranstehenden Patentansprüche und
- einer zweiten Prüfvorrichtung zur Überprüfung lichttechnischer Einrichtungen eines Kraftfahrzeuges (2), wobei
die zumindest eine erste und die zweite Prüfvorrichtung an einer gemeinsamen Prüfanordnung (6) angeordnet sind, die in einem Umgebungsbereich eines zu prüfenden Kraftfahrzeuges (2) positionierbar ist, und wobei
die zweite Prüfvorrichtung eine Linse (7) und ein Projektionsmittel (8) aufweist, um ein von einer lichttechnischen Einrichtung (9) des Kraftfahrzeuges (2) abgestrahltes Licht mittels der Linse (7) auf dem Projektionsmittel (8) abzubilden und dort ein Lichtabbild zu erzeugen.

8. Prüfsystem nach Patentanspruch 7, **gekennzeichnet dadurch, dass** die Prüfanordnung (6) derart modular aufgebaut ist, dass zumindest ein oder mehrere erste Prüfvorrichtungen nach zumindest einem der Patentansprüche 1-6 mit der Prüfanordnung (6) lösbar verbindbar sind.

9. Prüfystem nach zumindest einem der Patentansprüche 7 - 8, **gekennzeichnet dadurch, dass** die Prüfanordnung (6) auf Schienen und/oder Rädern (10) verfahrbar ist.

10. Prüfystem nach zumindest einem der Patentansprüche 7 - 9,
**gekennzeichnet dadurch, dass** die Prüfanordnung (6) einen Antrieb und eine Steuereinheit (11) aufweist, so dass die Prüfanordnung (6) mittels Steuerbefehlen von der Steuereinheit (11) selbsttätig verfahrbar ist und bevorzugt automatisch positionierbar ist.

11. Prüfsystem nach zumindest einem der Patentansprüche 7 - 10,
**gekennzeichnet dadurch, dass** die Prüfanordnung (6) eine Niveauregulierungseinrichtung aufweist, die dazu geeignet ist, selbststätig mittels eines Neigungssensors zu erfassen, ob die Prüfanordnung (6) waagrecht ausgerichtet ist, und die Prüfanordnung (6) in eine waagrechte Ausrichtung zu verfahren, falls die Prüfanordnung (6) nicht waagrecht ausgerichtet ist.

12. Prüfsystem nach zumindest einem der Patentansprüche 7 - 11,
**gekennzeichnet dadurch, dass** die Prüfanordnung (6) eine Raumorientierungs-Einrichtung aufweist, die dazu eingerichtet ist, eine räumliche Positionierung der Prüfanordnung (6) in Relation zu einem vorbestimmten Nullpunkt automatisch zu erfassen, und/oder
die Prüfanordnung (6) eine Niveauerfassungseinrichtung aufweist, die dazu eingerichtet ist, eine Höhe der Prüfanordnung (6) über einer Aufstandsebene, insbesondere einem Werkstattboden, zu erfassen.

13. Prüfsystem nach Patentanspruch 12, **gekennzeichnet dadurch, dass** die Raumorientierungs-Einrichtung zur automatischen räumlichen Orientierung Abstandssensoren aufweist und/oder zumindest ein GPS-Modul, und/oder wobei
die Prüfanordnung (6), insbesondere bei einem Einbau, mit bereits vorhandenen Prüfplatzsystemen einer Werkstatt synchronisierbar und anpassbar ist.

14. System nach zumindest einem der Patentansprüche 7 - 13, **gekennzeichnet dadurch, dass** die Prüfanordnung (6) derart eingerichtet ist, dass eine vollautomatisierte Prüfung eines Kraftfahrzeuges (2), insbesondere der sicherheitstechnischen und lichttechnischen Einrichtungen (4, 9) des Kraftfahrzeuges (2), mittels einem selbsttätigen Verfahren der Prüfanordnung (6) und mittels vorgegebenen Prüfprogrammabläufen ermöglicht ist.

15. System nach zumindest einem der Patentansprüche 7 - 13, **gekennzeichnet dadurch, dass** die Prüfanordnung (6) eine Datenbank aufweist, in einem standardisierten Datenformat, in der Funktionen und Prüfabfragen und ein Zugriff auf die sicherheitstechnischen und/oder lichttechnischen Einrichtungen (4, 9) des Kraftfahrzeuges (2) für eine standardisierte Diagnose basierend auf jeweils bei der Anwendung aktuellen Diagnosestandards bzgl. Diagnosedaten und Diagnoseprotokollen beschrieben sind.
